# EUROPEAN PATENT SPECIFICATION

(11) **EP 2 066 493 B1**
(45) Date of publication and mention of the grant of the patent: **30.03.2011**
(21) Application number: 07842851.3
(22) Date of filing: 20.09.2007
(51) Int. Cl.: B29D 11/00

(54) **METHOD OF DE-MOLDING CONTACT LENSES**
VERFAHREN ZUR ENTNAHME VON KONTAKTLINSEN AUS EINER FORM
PROCÉDÉ DE DÉMOULAGE DE LENTILLES DE CONTACT

(30) Priority: 21.09.2006 US 826439 P
(43) Date of publication of application: 10.06.2009
(73) Proprietor: Novartis AG, 4056 Basel (CH)
(72) Inventor: MATSUZAWA, Yasuo, Roswell, Georgia 30076 (US); TING, Chong Chai, Batu Pahat, Johor, 83000 (MY)
(74) Representative: Bohest AG
(86) International application number: PCT/US2007/078987
(87) International publication number: WO 2008/036795

(56) References cited:
- WO-A-95/11789
- WO-A-2006/094771
- US-A- 5 264 161

## Description

The present invention is related to an improved method for producing contact lenses, in particular silicone hydrogel contact lenses.

### BACKGROUND OF THE INVENTION

Silicone hydrogel contact lenses can be manufactures economically in large numbers by a conventional full-mold process involving disposable molds, the examples of which are disclosed in, for example, PCT patent application no. WO/87/04390, in EP-A 0 367 513 or in U.S. Patent No. 5,894,002. In a conventional molding process, a predetermined amount of a polymerizable material typically is introduced into a disposable mold comprising a female (concave) mold half and a male (convex) mold half. The female and male mold halves cooperate with each other to form a mold cavity having a desired geometry for a contact lens. Normally, a surplus of polymerizable material is used so that when the male and female halves of the mold are closed, the excess amount of the material is expelled out into an overflow area adjacent to the mold cavity. The polymerizable material remaining within the mold is polymerized by means of actinic radiation (e.g., UV irradiation, ionized radiation, microwave irradiation) or by means of heating. The starting material in the mold cavity is cured to form a lens while the excess material in the overflow area is partially or completely cured to form flashes. After curing, the mold is separated into the male and female mold halves with the formed lens adhered onto either male or female mold half.

However, there are several problems inherited in the conventional molding process. For instance, when the curing is completed, strong adherence between the mold and the lens and between the mold and flashes in the overflow area occurs. In addition to this adhesion, the male and female mold halves are sealed tight as if a vacuum is created in the mold and there is also strong adherence between the mold and flashes in the overflow area. In order to remove the lens, both mold halves must be separated first by a mechanical force. Due to the presence of seal between the male and female mold halves after curing, an extra force is needed to force separation of the mold halves from each other. Such extra force may cause lens damages, such as, fracture, tear etc. Separation-caused tear is more pronounced with toric contact lenses because of abrupt change in cross-section thickness. Further, if molds with molded lenses are not processed immediately, organic solvent in the polymerizable material can evaporate and tearing damages in the mold due to mechanically-forced mold separation may become significant. Mechanically-forced separation of molds can have adverse impacts on the product yield and lens quality.

After mold separation, the lens on its respective mold half (male or female) together is subjected to extraction with an organic solvent (e.g., IPA (isopropyl alcohol)). This is done because the lens is difficult to be removed from the mold half due to a strong adhesion between the lens and the mold half. It is believed that this strong adhesion is due to the tackiness of the surface of a silicone hydrogel lens so produced. If the lens is removed from the mold half by force, the lens can adhere to itself (curl) and lens handling can be difficult and/or the lens can be damaged due to extreme surface tackiness.

After the extraction, the lens, still on the mold half, is equilibrated in water and then removed from the mold half. However, the lens still adheres onto the mold surface, thus, a solvent mixture is used to deblock (or dislodge) the lens. The removed lens is further subjected to other process, such as, for example, plasma treatment, hydration, sterilization, etc.

In general, extraction and equilibration of lenses are carried out in batch processes. There are some disadvantages associated with each lens associated with one mold half. First, mold halves takes up valuable space in an extraction or equilibration tank and therefore reduce the capacity of extraction which can be carried out in each tank. Second, lens flashes can be partially or completely dissolve in an extraction bath. Any dissolution of lens flashes can potentially reduce extraction efficiency. Third, lens flashes may be still attached to the lens even after extraction and equilibration. Any lens with flashes attached thereto will be rejected and as such, production yield can be decreased. It would be desirable to have a step of removing, also known as "deblocking" or "dislodging", the lens from the lens-adhering mold half.

An organic solvent, such as, e.g., isopropyl alcohol (IPA), can be used to dislodge a silicone-hydorgel lens from its adhering mold half. The solvent swells the lens and helps reduce the forces holding the lens to the mold half surface. However, once a lens is swollen, the large size of the lens makes it difficult to handle due to lack of mechanical strength. In addition, the lens after swelling in an organic solvent (e.g., IPA) may still be sticky or tacky.

US 5,264,161 *discloses a method for manufacturing hydrophilic polymeric devices wherein surfactants are added to the hydration bath to assist in the mold release and processing of hydrophilic polymeric devices, especially hydrophilic contact lenses.*

PCT published international patent application No. WO 01/30558 describes a different approach for dislodging a lens from its adhering mold half, by lowering the temperature of the contact lens with a cryogenic material to a temperature and for a time sufficient for the lens to release from its adhering mold half without the application of external forces. The lowering of the temperature of the contact lens is accomplished by direct or indirect contact with a cryogenic substance, such as liquid nitrogen, liquid helium, liquid carbon dioxide, or solid carbon dioxide ("dry ice"). When a cryogenic substance is used to cool down a silicone hydrogel lens below its glass transition temperature (Tg), the surface tackiness temporarily freezes. This makes the lens separate from the mold half because of reduction in the tackiness and probably lens size reduction. However, the lens after separation becomes tacky again in air, which makes the lens handling difficult. In addition, use of a cryogenic substance can increases product cost.

Therefore, it would be beneficial to provide an improved process in which minimal force is required to separate mold halves so as to minimize lens damages resulted from the forced separation of mold halves and/or in which each lens is separated from its adhering mold half and/or lens flashes before extraction.

### SUMMARY OF THE INVENTION

The invention provides a method for producing contact lenses, according to claim 1. according to claim 1.

The present invention provides the foregoing and other features, and the advantages of the invention will become further apparent from the following detailed description of the presently preferred embodiments. The detailed description is merely illustrative of the invention and do not limit the scope of the invention, which is defined by the appended claims and equivalents thereof.

### BRIEF DESCRIPTION OF THE DRAWING

Figure 1 a cross-sectional view of a mold according to a preferred embodiment of the invention.
Figure 2 illustrates schematically a process of facilitating hot water penetration into a mold according to a preferred embodiment of the invention.

### DESCRIPTION OF PREFERRED EMBODIMENTS

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term.

A "hydrogel" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers.

A "silicone hydrogel" refers to a hydrogel obtained by copolymerization of a polymerizable composition comprising at least one silicone-containing vinylic monomer, at least one silicone-containing macromer, or at least one silicone-containing prepolymer.

A "vinylic monomer", as used herein, refers to a low molecular weight compound that has an ethylenically unsaturated group and can be polymerized actinically or thermally. Low molecular weight typically means average molecular weights less than 700 Daltons.

The term "olefinically unsaturated group" or "ethylefinically unsaturated group" is employed herein in a broad sense and is intended to encompass any groups containing at least one >C=C< group. Exemplary ethylenically unsaturated groups include without limitation acryloyl, methacryloyl, allyl, vinyl, styrenyl, or other C=C containing groups.

As used herein, "actinically" in reference to curing or polymerizing of a polymerizable composition or material means that the curing (e.g., crosslinked and/or polymerized) is performed by actinic irradiation, such as, for example, UV irradiation, ionized radiation (e.g. gamma ray or X-ray irradiation), microwave irradiation, and the like. Thermal curing or actinic curing methods are well-known to a person skilled in the art.

A "hydrophilic vinylic monomer", as used herein, refers to a vinylic monomer which as a homopolymer typically yields a polymer that is water-soluble or can absorb at least 10 percent by weight water.

A "hydrophobic vinylic monomer", as used herein, refers to a vinylic monomer which as a homopolymer typically yields a polymer that is insoluble in water and can absorb less than 10 percent by weight water.

A "macromer" refers to a medium and high molecular weight compound or polymer that contains ethylenically unsaturated groups and can be polymerized actinically or thermally. Medium and high molecular weight typically means average molecular weights greater than 700 Daltons.

A "polymer" means a material formed by polymerizing/crosslinking one or more monomers, macromers and or oligomers.

"Molecular weight" of a polymeric material (including monomeric or macromeric materials), as used herein, refers to the number-average molecular weight unless otherwise specifically noted or unless testing conditions indicate otherwise.

As used herein, a "prepolymer" refers to a starting polymer which can be cured (e.g., crosslinked and/or polymerized) actinically or thermally to obtain a crosslinked and/or, polymerized polymer having a molecular weight much higher than the starting polymer.

A "lens-forming material" refers to a polymerizable composition which can be cured (i.e., polymerized and/or crosslinked) thermally or actinically to obtain a crosslinked polymer. Lens-forming materials are well known to a person skilled in the art.

The invention is generally related to a method for separating mold and dislodging (or removing or de-blocking) of a silicone hydrogel contact lens from a mold after lens curing and before lens extraction. The invention is partly based on the discovery that alternative use of hot water and room temperature water can be used efficiently to reduce forces for separating molds into mold halves and for dislodging a silicone-hydrogel lens from its adhering mold half, thereby increasing production yield.

Although the inventors do not wish to be bound by any particular theory, it is believed that due to the presence of seal between the male and female mold halves after curing a polymerizable material in the mold and of strong adhesion between the mold and the flashes in the overflow area of the mold, an extra force is needed to force separation of the mold halves from each other. Such extra force may cause lens damages, such as, fracture, tear etc. and thereby can have adverse impacts on the product yield and lens quality.

It is also believed that the strong adhesion between a silicone hydrogel lens and a mold half and the tackiness of the surfaces of the lens are mainly due to uncured monomeric and oligomeric components at the interface between the cured lens-forming material and the mold surface. The uncured components are significant present at the interface because of the oxygen involvement during the polymerization at the interface. The uncured monomers or macromers or oligomers become adhesive at the interface, resulting in difficulty in dislodging the lens from the mold surface.

It is further believed that alternative use of hot water and room-temperature or cold water may play the following several roles in separating a mold into mold halves and dislodging a lens from a mold half and in reducing the tackiness of the surfaces of the lens. First, when soaking a mold with a molded lens therein in hot water, the hot water can heat and expand the mold halves so as to create a small gap between the mold halves and to break vacuum seal between mold halves, thereby reducing force for mold separation. Hot water then can seep into the mold through the flashes in the overflow area more quickly than room temperature water or cold water. Hot water may not only dissolve or at least hydrate the flashes but also hydrate the molded lens therein. Hot water can replace a portion of an organic solvent present in a molded silicone-hydrogel lens by exchange, since a polymerizable material for mold-casting of silicon-hydrogel lenses generally contains an organic solvent. Replacement of an organic solvent by water can decrease the swelling of the molded lens and make the molded lens smaller in diameter, allowing the molded lens disengage from the mold surface. The hydrated lens is much less likely to be tom during mold separation, even when molds with a molded lens therein are stored for a long period of time. Furthermore, separating molds, in-situ, in hot water can further ensure not to stress the edge of the contact lens.

Second, the uncured polymerizable components (such as, e.g., monomers, macromers, and/or oligomers) located at the interface between a molded lens and a mold half can be dissolved in hot water. Dissolution of the uncured polymerizable components can reduce substantially the tackiness of the surfaces of a molded lens and facilitate the handling of the lens after dislodging from the mold half.

Third, because of relatively high temperature, hot water can induce the contraction of thermally reversible silicone-hydrogel network while simultaneously cause the expansion of a lens-adhering mold half. As such, a silicone-hydrogel lens can be easily dislodged from the lens-adhering mold half.

Fourth, soaking lens and the lens-adhering mold half in room temperature or cold water can cause differential contraction of the lens and the mold half, thereby further facilitating dislodging of the lens from the mold half.

There are several advantages associated with a method of the invention. First, application of hot water enables a molded lens to be dislodged from its adhering mold half without tearing the lens. Second, lens dislodging by hot water is a relatively fast process, for example, taking several seconds. Third, without mold halves, an extraction tank can accommodate much more lenses and product cost associated with extraction equipments can be decreased. Fourth, removal of the flashes and uncured polymerizable components can increase extraction efficiency.

Another embodiment of the invention is provied by claim 2.

Methods of manufacturing mold sections for cast-molding a contact lens are generally well known to those of ordinary skill in the art. The process of the present invention is not limited to any particular method of forming a mold. In fact, any method of forming a mold can be used in the present invention. However, for illustrative purposes, the following discussion has been provided as one embodiment of forming a mold.

In general, a mold comprises at least two mold sections (or portions) or mold halves, i.e. male and female mold halves. The male mold half defines a first molding (for optical) surface defining the posterior (concave) surface of a lens and the second mold half defines a second molding (or optical) surface defining the anterior (convex) surface of a lens. The first and second mold halves are configured to receive each other such that a lens forming cavity is formed between the first molding surface and the second molding surface. The molding surface of a mold half is the cavity-forming surface of the mold and in direct contact with lens-forming material.

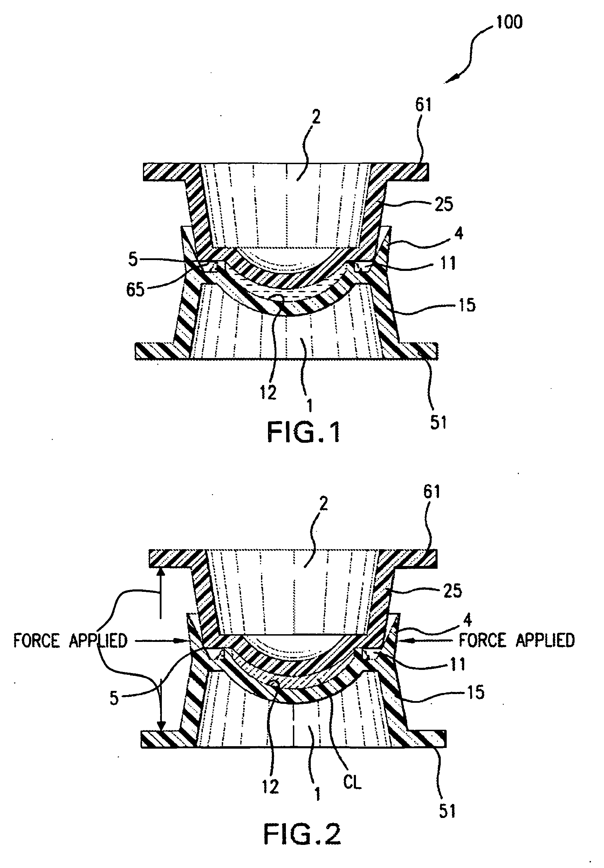

FIG. 1 schematically illustrates a preferred mold **100** used in the methods and apparatus of the invention. The mold **100** comprises a female mold half **1** having an anterior molding surface defining the anterior (i.e., convex curvature) surface of a molded contact lens and a male mold half **2** having a posterior molding surface defining the posterior (i.e., concave curvature) surface of the molded contact lens. The female mold half **1** and a male mold half **2** are configured to receive each other such that a contact lens forming cavity **12** is formed between the anterior and posterior molding surfaces.

The female mold half **1** includes a collar (or up-protruding flange) **4** which is attached to or preferably integral part of the female mold half **1.** The collar **4** encircles parts of the male mold half **2** to provide a tight seal **5** between the female and male mold halves when the mold is closed. It is understood that the collar can be provided on either of the male and female mold halves.

The term "collar" as used herein refers to a protruding peripheral circular part of one of the two mating mold halves, which can be attached to or preferably integral part of that mold half and which can encircle the other mold half to provide a tight seal between the two mold halves.

Preferably, the male mold half is subjected to corona treatment prior to its use in order for the molded contact lens to adhere preferentially to the male mold half when opening the mold. Such pre-treatment is described in U.S. Patent No. 5,894,002. It will readily be understood by one skilled in the art that, instead of the male mold half 2, the female mold half 1 can also be pre-treated, which has the result that the contact lens subsequently adheres to the female mold half **1,** and the female mold half 1 with the contact lens located therein then has to be further processed.

In operation, mold halves **1** and **2** can be first injection molded from a plastic resin in an injection molding apparatus, as well known to a person skilled in the art. A specific amount of a polymerizable lens-forming material is typically dispensed into the female mold half **1** by means of a dispensing device and then the male mold half **2** is put on and the mold **100** is closed (FIG. 1). As the mold **100** closes, any excess unpolymerized lens-forming material is pressed into an overflow **11** provided on the female mold half **1.**

Subsequently, the closed mold **100** containing the polymerizable lens-forming material is subjected to actinic irradiation (e.g., UV radiation), at least in the region of the lens forming cavity **12.** For this purpose, at least one of the mold halves is transparent to the actinic radiation (e.g., UV light) at least in the region of the molding surface. Thus, at least the polymerizable lens-forming material in the lens forming cavity **12** is polymerized. It is also possible for any polymerizable lens-forming material in the overflow **11** to be polymerized. This is advantageous in the respect that, when the mold is opened, the excess polymerized lens-forming material then remains in the overflow **11** of the female mold half 1, while the contact lens adhering to the male mold half **2** can be removed and further processed together with male mold half **2.**

Preferably, before being opened, the mold together with the contact lens **CL** inside it is placed while still closed in a tempering oven for tempering and is tempered for a time at a temperature of approximately 120°C, whereby any stresses in the material are relieved and the polymerization is finally completed.

The mold halves can be formed through various techniques, such as injection molding. Methods of manufacturing mold halves for cast-molding a contact lens are generally well known to those of ordinary skill in the art. The process of the present invention is not limited to any particular method of forming a mold. In fact, any method of forming a mold can be used in the present invention. The first and second mold halves can be formed through various techniques, such as injection molding or lathing. Examples of suitable processes for forming the mold halves are disclosed in U.S. Patent Nos. 4,444,711 to Schad; 4,460,534 to Boehm et al.; 5,843,346 to Morrill; and 5,894,002 to Boneberger et al.

Virtually all materials known in the art for making molds can be used to make molds for making contact lenses. For example, polymeric materials, such as polyethylene, polypropylene, polystyrene, PMMA, Topas^{®} COC grade 8007-S10 (clear amorphous copolymer of ethylene and norbornene, from Ticona GmbH of Frankfurt, Germany and Summit, New Jersey), or the like can be used. Other materials that allow UV light transmission could be used, such as quartz glass and sapphire.

In accordance with the invention, a silicone hydrogel lens-forming material comprises at least one silicon-containing monomer or macromer, or can be any lens formulations for making soft contact lenses. Exemplary lens formulations include without limitation the formulations of lotrafilcon A, lotrafilcon B, etafilcon A, genfilcon A, lenefilcon A, polymacon, acquafilcon A, balafilcon, senofilcon A, and the like. A lens-forming material can further include other components, such as an initiator (e.g., a photoinitiator or a thermal initiator), a visibility tinting agent, UV-blocking agent, photosensitizers, and the like. Preferably, a silicone hydrogel lens-forming material used in the present invention comprises a silicone-containing macromer or prepolymer.

Examples of silicone-containing vinylic monomers include, without limitation, methacryloxyalkylsiloxanes, 3-methacryloxy propylpentamethyldisiloxane, bis(methacryloxypropyl)tetramethyl-disiloxane, monomethacrylated polydimethylsiloxane, mercapto-terminated polydimethylsiloxane, N-[tris(trimethylsiloxy)silylpropyl]acrylamide, N-[tris(trimethytsitoxy)silylpropyl]methacrylamide, tris(pentamethyldisiloxyanyl)-3-methacrylatopropylsilane (T2), and tristrimethylsilyloxysilylpropyl methacrylate (TRIS). A preferred siloxane-containing monomer is TRIS, which is referred to 3-methacryloxypropyltris(trimethylsiloxy) silane, and represented by CAS No. 17096-07-0. The term "TRIS" also includes dimers of 3-methacryloxypropyltris(trimethylsiloxy) silane.

Any suitable siloxane-containing macromer with ethylenically unsaturated group(s) can be used to produce a silicone hydrogel material. A particularly preferred siloxane-containing macromer is selected from the group consisting of Macromer A, Macromer B, Macromer C, and Macromer D described in US 5,760,100. Macromers that contain two or more polymerizable groups (vinylic groups) can also serve as cross linkers. Di and triblock macromers consisting of polydimethylsiloxane and polyakyleneoxides could also be of utility. Such macromers could be mono or difunctionalized with acrylate, methacrylate or vinyl groups. For example one might use methacrylate end capped polyethyleneoxide-block-polydimethylsiloxane-block-polyethyleneoxide to enhance oxygen permeability.

Examples of silicone-containing prepolymers include without limitation those disclosed in US Patent Application Publication No. US 2001-0037001 A1 and US Patent No. 6,039,913 . Preferably, the prepolymers used in the invention are previously purified in a manner known per se, for example by precipitation with organic solvents, such as acetone, filtration and washing, extraction in a suitable solvent, dialysis or ultrafiltration, ultrafiltration being especially preferred. By means of that purification process the prepolymers can be obtained in extremely pure form, for example in the form of concentrated aqueous solutions that are free, or at least substantially free, from reaction products, such as salts, and from starting materials, such as, for example, non-polymeric constituents. The preferred purification process for the prepolymers used in the process according to the invention, ultrafiltration, can be carried out in a manner known per se. It is possible for the ultrafiltration to be carried out repeatedly, for example from two to ten times. Alternatively, the ultrafiltration can be carried out continuously until the selected degree of purity is attained. The selected degree of purity can in principle be as high as desired. A suitable measure for the degree of purity is, for example, the concentration of dissolved salts obtained as by-products, which can be determined simply in known manner.

In accordance with the present invention, a silicone hydrogel lens-forming material can also comprise a hydrophilic vinylic monomer. Nearly any hydrophilic vinylic monomer that can act as a plasticizer can be used in the fluid composition of the invention. Among the preferred hydrophilic monomers are N,N-dimethylacrylamide (DMA), 2-hydroxyethylmethacrylate (HEMA), hydroxyethyl acrylate, hydroxypropyl acrylate, hydroxypropyl methacrylate (HPMA), trimethylammonium 2-hydroxy propylmethacrylate hydrochloride, dimethylaminoethyl methacrylate (DMAEMA), dimethylaminoethylmethacrylamide, acrylamide, methacrylamide, allyl alcohol, vinylpyridine, glycerol methacrylate, N-(1,1 dimethyl-3-oxobutyl)acrylamide, N-vinyl-2-pyrrolidone (NVP), acrylic acid, methacrylic acid, and N,N-dimethyacrylamide (DMA).

A silicone hydrogel lens-forming material can also comprises a hydrophobic monomer. By incorporating a certain amount of hydrophobic vinylic monomer in a polymerizable fluid composition, the mechanical properties (e.g., modulus of elasticity) of the resultant polymer may be improved.

A silicone hydrogel lens-forming material can further comprise an antimicrobial agent, preferably antimicrobial metal nanoparticles, more preferably silver nanoparticles.

In accordance with the present invention, a silicone hydrogel lens-forming material can be a solution or a solvent-free liquid or melt at a temperature below 90°C. A person skilled in the art will known well how to prepare silicone hydrogel lens-forming material.

In accordance with the present invention, a silicone hydrogel lens-forming material can be a solution or a solvent-free liquid or melt at a temperature below 60°C.

A silicone hydrogel lens-forming material can further comprise a non-crosslinkable hydrophilic polymer (i.e., without any ethylenically unsaturated group). Any non-crosslinkable hydrophilic polymers can be used in the invention. Exemplary non-crosslinkable hydrophilic polymers include, but are not limited to, polyvinylalcohols (PVAs), polyethylene oxide, polyethylene-polypropylene block copolymers, polyamides, polyimides, polylactone, a homopolymer of a vinyl lactam of formula (I) shown above, a copolymer of at least one vinyl lactam of formula (I) shown above in the presence or in the absence of one or more hydrophilic vinylic comonomers, a homopolymer of acrylamide or methaacrylamide, a copolymer of acrylamide or methacrylamide with one or more hydrophilic vinylic monomers, mixtures thereof.

A non-crosslinkable hydrophilic polymer is present in the silicone hydrogel lens-forming material in an amount sufficient to render a formed silicone hydrogel lens having a wettable and durable coating, for example, in an amount of from about 0.5% to about 10 % by weight, preferably from about 1% to about 8.0 % by weight, and more preferably from about 3% to about 6 % by weight, each based on the entire weight of the composition.

The number-average molecular weight Mₙ of a non-crosslinkable hydrophilic polymer is at least 40000 daltons, preferably at least 80000 daltons, more preferably at least 100000 daltons, even more preferably at least 250000 daltons.

Examples of hydrophilic polymers include but are not limited to polyvinylalcohol (PVA), polyethylene oxide (i.e., polyethyleneglycol (PEG)), poly-N-vinyl pyrrolidone, poly-N-vinyl-2-piperidone, poly-N-vinyl-2-caprolactam, poly-N-vinyl-3-methyl-2-caprolactam, poly-N-vinyl-3-methyl-2-piperidone, poly-N-vinyl-4-methyl-2-piperidone, poly-N-vinyl-4-methyl-2-caprolactam, poly-N-vinyl-3-ethyl-2-pyrrolidone, and poly-N-vinyl4,5-dimethyl-2-pyrrolidone, polyvinylimidazole, poly-N-N-dimethylacrylamide, polyacrylic.acid, poly 2 ethyl oxazoline, heparin polysaccharides, polysaccharides, a polyoxyethylene derivative, mixtures thereof.

A suitable polyoxyethylene derivative is, for example, a n-alkylphenyl polyoxyethylene ether, n-alkyl polyoxy-ethylene ether (e.g., TRITON^{®}), polyglycol ether surfactant (TERGITOL^{®}), polyoxyethylenesorbitan (e.g., TWEEN^{®}), polyoxyethylated glycol monoether (e.g., BRIJ^{®}, polyoxylethylene 9 lauryl ether, polyoxylethylene 10 ether, polyoxylethylene 10 tridecyl ether), or a block copolymer of ethylene oxide and propylene oxide (e.g. poloxamers or poloxamines).

A class of preferred polyoxyethylene derivatives used in the present invention are polyethylene-polypropylene block copolymers, in particular poloxamers or poloxamines which are available, for example, under the tradename PLURONIC^{®}, PLURONIC-R^{®}, TETRONIC^{®}, TETRONIC-R^{®} or PLURADOT^{®}.

Poloxamers are triblock copolymers with the structure PEO-PPO-PEO (where "PEO" is poly(ethylene oxide) and "PPO" is poly(propylene oxide). A considerable number of poloxamers is known, differing merely in the molecular weight and in the PEO/PPO ratio; Examples are poloxamer 101, 105, 108, 122, 123, 124, 181, 182, 183, 184, 185, 188, 212, 215, 217, 231, 234, 235, 237, 238, 282, 284, 288, 331, 333, 334, 335, 338, 401, 402, 403 and 407. The poloxamers may be used in the process of the invention irrespective of their PEO/PPO ratio; for example, poloxamer 101 having a PEO/PPO weight ratio of about 10/90 and poloxamer 108 having a PEO/PPO weight ratio of about 80/20 both have been found to be valuable as non-crosslinkable polymer in the aqueous solution according to step a).

The order of polyoxyethylene and polyoxypropylene blocks can be reversed creating block copolymers with the structure PPO-PEO-PPO, which are known as PLURONIC-R^{®} polymers.

Poloxamines are polymers with the structure (PEO-PPO)₂-N-(CH₂)₂-N-(PPO-PEO)₂ that are available with different molecular weights and PEO/PPO ratios . Again, the order of polyoxyethylene and polyoxypropylene blocks can be reversed creating block copolymers with the structure (PPO-PEO)₂-N-(CH₂)₂-N-(PEO-PPO)₂. which are known as TETRONIC-R^{®} polymers.

Polyoxypropylene-polyoxyethylene block copolymers can also be designed with hydrophilic blocks comprising a random mix of ethylene oxide and propylene oxide repeating units. To maintain the hydrophilic character of the block, ethylene oxide will predominate. Similarly, the hydrophobic block can be a mixture of ethylene oxide and propylene oxide repeating units. Such block copolymers are available under the tradename PLURADOT®.

PVA is a highly biocompatible material used widely in ophthalmic products, especially wetting drops or artificial tears for ocular comfort (e.g., HypoTears™, etc.). Non-crosslinkable PVAs of all kinds, for example those with low, medium or high polyvinyl acetate contents may be employed. The non-crosslinkable polyvinyl alcohols employed in the present invention are known and are commercially available, for example under the brand name Mowiol^{®} from KSE (Kuraray Specialties Europe).

Preferably, a silicone-hydrogel lens-forming material comprises at least one high molecular weight non-crosslinkable PVA with a Mₙ of from above 50000 to 100000, preferably from above 50000 to 75000 and at least one low molecular weight non-crosslinkable PVA with a Mₙ of from 25000 to 50000, preferably from 30000 to 50000.

In case of two or more different non-crosslinkable PVAs, the total amount thereof in the composition is as described before including the preferences given. The weight proportion of the lower molecular weight and higher molecular weight non-crosslinkable PVA may vary within broad ranges, but is, for example, from 1:1 to 5:1, preferably from 1:1 to 4:1, and in particular from 1:1 to 3:1.

A mixture of non-crosslinkable PVAs and polyethyleneglycol (PEG) can be used in the invention. PVA and PEG may have synergy for enhancing surface wettability of a silicone hydrogel contact lens.

In accordance with the present invention, a silicone hydrogel lens-forming material can further comprise various components, such as cross-linking agents, initiator, UV-absorbers, inhibitors, fillers, visibility tinting agents (e.g., dyes, pigments, or mixtures thereof), and the like.

Cross-linking agents may be used to improve structural integrity and mechanical strength. Examples of cross-linking agents include without limitation allyl(meth)acrylate, lower alkylene glycol di(meth)acrylate, poly lower alkylene glycol di(meth)acrylate, lower alkylene di(meth)acrylate, divinyl ether, divinyl sulfone, di- or trivinylbenzene, trimethylolpropane tri(meth)acrylate, pentaerythritol tetra(meth)acrylate, bisphenol A di(meth)acrylate, methylenebis(meth)acrylamide, triallyl phthalate or diallyl phthalate. A preferred cross-linking agent is ethylene glycol dimethacrylate (EGDMA).

The amount of a cross-linking agent used is expressed in the weight content with respect to the total polymer and is preferably in the range from 0.05 to 5%, and more preferably in the range from 0.1 to 2%.

Initiators, for example, selected from materials well known for such use in the polymerization art, may be included in the polymerizable fluid composition in order to promote, and/or increase the rate of, the polymerization reaction. An initiator is a chemical agent capable of initiating polymerization reactions. The initiator can be a photoinitiator or a thermal initiator.

A photoinitiator can initiate free radical polymerization and/or crosslinking by the use of light. Suitable photoinitiators are benzoin methyl ether, diethoxyacetophenone, a benzoylphosphine oxide, 1-hydroxycyclohexyl phenyl ketone and Darocur and Irgacur types, preferably Darocur 1173® and Darocur 2959®. Examples of benzoylphosphine initiators include 2,4,6-trimethylbenzoyldiphenylophosphine oxide; bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 632 329, herein incorporated by reference in its entirety. The polymerization can then be triggered off by actinic radiation, for example light, in particular UV light of a suitable wavelength. The spectral requirements can be controlled accordingly, if appropriate, by addition of suitable photosensitizers

Examples of suitable thermal initiators include, but are not limited to, 2,2'-azobis (2,4-dimethylpentanenitrile), 2,2'-azobis (2-methylpropanenitrile), 2,2'-azobis (2-methylbutanenitrile), peroxides such as benzoyl peroxide, and the like. Preferably, the thermal initiator is azobisisobutyronite (AIBN).

Examples of preferred pigments include any colorant permitted in medical devices and approved by the FDA, such as D&C Blue No. 6, D&C Green No. 6, D&C Violet No. 2, carbazole violet, certain copper complexes, certain chromium oxides, various iron oxides, phthalocyanine green, phthalocyanine blue, titanium dioxides, etc. See Marmiom DM Handbook of U.S. Colorants for a list of colorants that may be used with the present invention. A more preferred embodiment of a pigment include (C.I. is the color index no.), without limitation, for a blue color, phthalocyanine blue (pigment blue 15:3, C.I. 74160), cobalt blue (pigment blue 36, C.I. 77343), Toner cyan BG (Clariant), Permajet blue B2G (Clariant); for a green color, phthalocyanine green (Pigment green 7, C.I. 74260) and chromium sesquioxide; for yellow, red, brown and black colors, various iron oxides; PR122, PY154, for violet, carbazole violet; for black, Monolith black C-K (CIBA Specialty Chemicals).

A specific amount of a polymerizable lens-forming material is typically dispensed into a female mold half by means of a dispensing device and then a male mold half is put on and the mold is closed. As the mold closes, any excess unpolymerized lens-forming material is pressed into an overflow provided on the female mold half (or alternatively on the male mold half).

The closed mold containing the polymerizable lens-forming material subsequently is cured. A person skilled in the art knows well how to cure a lens-forming material. For example, a lens-forming material is subjected to actinic irradiation (e.g., UV radiation) at least in the region of the lens forming cavity or thermal treatment (e.g., heating in an oven) to form a lens. For actinic curing, at least one of the mold halves is transparent to the actinic radiation (e.g., UV light) at least in the region of the molding surface. Thus, at least the polymerizable lens-forming material in the lens forming cavity is polymerized. It is also possible for any polymerizable lens-forming material in the overflow to be polymerized. This is advantageous in the respect that, when the mold is opened, the excess polymerized lens-forming material then remains in the overflow of the female mold half, while the contact lens adhering to the male mold half can be removed and further processed together with male mold half.

The mold with the molded silicone hydrogel contact lens therein is soaked in hot water for a time sufficiently long to allow the hot water to get into the mold and hydrate the molded lens therein. The soaking time is preferably less than about 20 minutes, more preferably less than about 10 minutes, even more preferably less than about 5 minutes, most preferably less than 1 minute.

Preferably, a small force is used to facilitate breaking of the seal between the mold halves and thereby to accelerate penetration of hot water into the mold. As an illustrative example, a small force (as illustrated by horizontal arrows in FIG. 2) can be applied onto the collar **4** of the female mold half to break the seal between the mold halves, as shown in FIG. **2****.** The lens-forming cavity **12** is sealed with the collar **4** of the female mold half 1 and the male mold half **1.** A small amount of force can distort the collar **4** of the female mold half **1** and then the seal can be easily broken. Various ways of applying a small force to the collar **14** can be performed. For example, a small force is applied to two opposite small areas on the collar **14** by any mechanical means known to a person skilled in the art. Alternatively, a small force can be applied to one small area on one side of the collar **14,** while holding the mold in position (e.g., a locking position) or while stopped by a stopper located on one side opposite to the side onto which the small force is applied directly, by any mechanical means known to a person skilled in the art.

Alternatively, a small force can be applied simultaneously to the male and female mold halves as illustrated by the vertical arrows to slightly crack open the mold so as to let hot water penetrate into the mold.

A hot water is intended to describe a water having a temperature of higher than about 50°C, preferably higher than about 60°C, more preferably higher than about 70°C, even more preferably from about 80°C to about 95°C.

Preferably, the mold is separated in the hot water into the male and female mold halves, with the silicone hydrogel contact lens adhered on one of the male and female mold halves. The molded lens is adhered either on the male mold half or on the female mold half. With pre-treatment of molds, one can ensure that a molded contact lens is preferentially adhered to one particular mold half, the male mold half or the female mold half, when opening the mold. It is understood that the mold can be separated out of hot water. Mold separation can performed by a device, for example, such as an apparatus described in a copending U.S. Published Patent application No. US 2005-0212155 A1.

Preferably, the lens adhered on a mold half its soaked in hot water for a period time sufficient to ensure hot water penetrate into interface between the lens and the lens-adhering mold half so as to reduce adhesion between the lens and the lens-adhering mold half. A period of time of at least about 5 seconds, preferably at least about 15 second, more preferably at least about 30 seconds, even more preferably at least about 1 minute is allowed to let hot water to penetrate into interface between the lens and the lens-adhering mold half. Hot water can dissolve and remove uncured polymerizable components (such as, e.g., monomers, macromers, and/or oligomers) located at the interface between a molded lens and a mold half and on the surface of the molded lens. Dissolution of the uncured polymerizable components in hot water can reduce substantially the tackiness of the surfaces of a molded lens and facilitate the handling of the lens after dislodging from the mold half.

In accordance with the invention, the mold half with the lens adhered thereon is then soaked in room-temperature water or cold water to cause the lens and the lens-adhering mold half contract differentially so as to facilitate dislodging of the lens from the lens-adhering mold half. A room temperature water is intended to describe a water having a temperature of from about 15°C to about 35°C, more preferably from about 20°C to about 30°C. A cold water is intended to describe a water having a temperature of below about 15°C, preferably below about 10°C, more preferably below about 5°C.

After soaking in room-temperature or cold water, the lens can be removed, for example, by a pair of tweezers the tips of which are covered with silicone rubber or a lens removing device known to a person skilled in the art. Preferably, after dislodging from the mold half, the lens is placed in a tray for further processing, such as, for example, extraction, hydration, etc. As used herein, a tray is intended to describe a device which can hold a plurality of contact lenses and used in lens processing, such as, for example, extraction, hydration, equilibration. Any trays or equivalents can be used in the invention. Preferred trays are those described in a copending U.S. Published Patent Application No. US 2003-0024829 A1 (here incorporated by reference in its entirety).

It is understood that a method of the invention can be performed manually or automatically under control of a computer. A person skilled in the art known how to automate a method of the invention.

It is also understood that a silicone-hydrogel lens so produced can further subject other lens manufacturing processes, such as for example, surface treatment, sterilization, and the like.

A "surface treatment" is intended to describe a process in which a lens has been treated by means of contact with a vapor or liquid, and/or by means of application of an energy source and as such, (1) a coating is applied to the surface of the lens, (2) chemical species are adsorbed onto the surface of the lens, (3) the chemical nature (e.g., electrostatic charge) of chemical groups on the surface of the lens are altered, or (4) the surface properties of the lens are otherwise modified. Exemplary surface treatment processes include, but are not limited to, a surface treatment by energy (e.g., a plasma, a static electrical charge, irradiation, or other energy source), chemical treatments, the grafting of hydrophilic monomers or macromers onto the surface of an article, and layer-by-layer (LbL coating) deposition of polyelectrolytes. A preferred class of surface treatment processes are plasma processes, in which an ionized gas is applied to the surface of an article. Plasma gases and processing conditions are described more fully in U.S. Pat. Nos. 4,312,575 and 4,632,844. The plasma gas is preferably a mixture of lower alkanes and nitrogen, oxygen or an inert gas.

"LbL coating", as used herein, refers to a coating that is not covalently attached to an article, preferably a medical device, and is obtained through a layer-by-layer ("LbL") deposition of polyionic (or charged) and/or non-charged materials on an article. An LbL coating can be composed of one or more layers, preferably one or more bilayers.

The term "bilayer" is employed herein in a broad sense and is intended to encompass: a coating structure formed on a medical device by alternatively applying, in no particular order, one layer of a first polyionic material (or charged material) and subsequently one layer of a second polyionic material (or charged material) having charges opposite of the charges of the first polyionic material (or the charged material); or a coating structure formed on a medical device by alternatively applying, in no particular order, one layer of a first charged polymeric material and one layer of a non-charged polymeric material or a second charged polymeric material. It should be understood that the layers of the first and second coating materials (described above) may be intertwined with each other in the bilayer.

Formation of an LbL coating on a medical device, in particular, an ophthalmic device, may be accomplished in a number of ways, for example, as described in commonly-owned US Patent Ser. No. 6,451,871 (herein incorporated by reference in its entirety) and commonly-owned pending U.S. patent applications (Appl. Nos. 09/774942, 09/775104, 10/654,566) . One coating process embodiment involves solely dip-coating and dip-rinsing steps. Another coating process embodiment involves solely spray-coating and spray-rinsing steps. However, a number of alternatives involve various combinations of spray- and dip-coating and rinsing steps may be designed by a person having ordinary skill in the art.

Although various embodiments of the invention have been described using specific terms, devices, and methods, such description is for illustrative purposes only. The words used are words of description rather than of limitation. It is to be understood that changes and variations may be made by those skilled in the art without departing from the scope of the present invention, which is set forth in the following claims. In addition, it should be understood that aspects of the various embodiments may be interchanged either in whole or in part. Therefore, the scope of the appended claims should not be limited to the description of the preferred versions contained therein.

## Claims

1. A method for producing contact lenses, comprising the steps of :
a) providing a mold including a male mold half having a first molding surface and a female mold half having a second molding surface, wherein the male and female mold halves are configured to receive each other such that a mold cavity is formed between the first and second molding surfaces when the mold is closed;
b) dispensing an amount of a silicone hydrogel lens-forming material into one of the male and female mold halves;
c) mating the male and female mold halves to close the mold;
d) curing the silicone hydrogel lens-forming material located between the two mold halves, thereby forming a molded silicone hydrogel contact lens;
e) soaking the mold with the molded silicone hydrogel contact lens therein in hot water having a temperature of higher than about 50°C for a time sufficiently long to allow the hot water to get into the mold and hydrate the molded lens therein;
f) separating the mold into the male and female mold halves, with the silicone hydrogel contact lens adhered on one of the male and female mold halves; and
h) soaking the lens adhered on the lens-adhering mold half in room-temperature water having a temperature of from about 15°C to about 35°C or cold water having a temperature of below about 15°C to cause the lens and the lens-adhering mold half contract differentially so as to facilitate dislodging of the lens from the lens-adhering mold half; and removing the lens from the lens-adhering mold half for further processing.

2. The method of claim 1, wherein the method comprises the step g) in which the lens adhered on a mold half is soaked in hot water having a temperature of higher than about 50°C for a period of time sufficient to ensure that the hot water penetrates into the interface between the lens and the lens-adhering mold half so as to reduce adhesion between the lens and the lens-adhering mold half.

3. The method of claim 1 or 2, wherein one of the female and male mold halves is subjected to a surface treatment prior to its use in order for the molded contact lens to adhere preferentially to one particular mold half when opening the mold.

4. The method of claim 3, wherein the surface treatment is a corona treatment or a plasma treatment.

5. The method of any one of claims 1 to 4, wherein the hot water has a temperature of higher than about 70°C.

6. The method of any one of claims 1 to 5, wherein in step f) the mold is separate in the hot water.

7. The method of claim 2, wherein in step g) at least about 5 seconds is allowed to let the hot water penetrate into the interface between the lens and the lens-adhering mold half.

8. The method according to any one of claims 1-7, wherein in the step h) the mold half with the lens adhered thereon is soaked in cold water having a temperature of below about 15°C.

9. The method of claim 8, wherein the cold water has a temperature of lower than about 10°C.

10. The method of claim 8, wherein the cold water has a temperature of lower than about 5°C.

11. The method according to any one of claims 1-7, wherein in the step h) the mold half with the lens adhered thereon is soaked in room temperature water having a temperature of from about 15°C to about 35°C.

12. The method of claim 11 , wherein the room temperature water has a temperature of from about 20°C to about 30°C.

13. The method of any one of the preceding claims, further comprising the step of removing the lens from the lens- adhering mold half and placing the lens in a tray for further processing.

14. The method of claim 13, wherein the further processing of the lens includes at least one member selected from the group consisting of extraction, surface treatment, hydration, equilibration, packaging, sterilization, and combinations thereof.

15. The method of any one of the preceding claims, wherein the method is performed automatically under control of a computer.

16. The method of any one of the preceding claims, wherein a small force is used to facilitate breaking of the seal between the mold halves and/or to accelerate penetration of the hot water into the mold.

## Patentansprüche

1. Verfahren zur Herstellung von Kontaktlinsen umfassend die Schritte:
a) Bereitstellen einer Form umfassend eine männliche Formhälfte mit einer ersten Formfläche und einer weiblichen Formhälfte mit einer zweiten Formfläche, wobei die männliche und weibliche Formhälfte so ausgebildet sind, dass sie einander derart aufnehmen dass zwischen der ersten und zweiten Formfläche ein Formhohlraum gebildet wird wenn die Form geschlossen ist;
b) Dosieren einer Menge eines linsenbildenden Silikonhydrogel-Materials in eine der männlichen oder weiblichen Formhälften;
c) Zusammenfügen der männlichen und weiblichen Formhälften zum Schließen der Form;
d) Härten des linsenbildenden Silikonhydrogel-Materials zwischen den zwei Formhälften, und dabei Bilden einer Silikonhydrogel-Kontaktlinse;
e) Einweichen der Form mir der gebildeten Silikonhydrogel-Kontaktlinse darin in heißem Wasser mit einer Temperatur von mehr als etwa 50°C für eine Zeitdauer die ausreicht, dass das heiße Wasser in die Form gelangt und die darin gebildete Linse hydratisiert;
f) Trennen der Form in die männliche und weibliche Formhälfte, wobei die Silikonhydrogel-Kontaktlinse an einer der männlichen oder weiblichen Formhälften anhaftet; und
h) Einweichen der an der linsenanhaftenden Formhälfte anhaftenden Linse in Raumtemperatur-Wasser mit einer Temperatur von etwa 15°C bis etwa 35°C oder kaltem Wasser mit einer Temperatur unter etwa 15°C, um ein relatives Schrumpfen der Linse und der linsenanhaftenden Formhälfte zu erreichen, um so das Ablösen der Linse aus der linsenanhaftenden Formhälfte zu erleichtern; und Entfernen der Linse aus der linsenanhaftenden Formhälfte zur weiteren Bearbeitung.

2. Verfahren gemäß Anspruch 1, wobei das Verfahren den Schritt g) umfasst in dem die an der Formhälfte anhaftende Linse in heißem Wasser mit einer Temperatur von mehr als etwa 50°C eingeweicht wird für eine Zeitdauer die ausreicht, dass das heiße Wasser in die Grenzfläche zwischen der Linse und der linsenanhaftenden Formhälfte eindringt so dass die Adhäsion zwischen der Linse und der linsenanhaftenden Formhälfte reduziert wird.

3. Verfahren gemäß Anspruch 1 oder 2, wobei eine der weiblichen oder männlichen Formhälften vor ihrer Verwendung einer Oberflächenbehandlung unterzogen wird, damit die gebildete Kontaktlinse beim Öffnen der Form vorzugsweise an einer bestimmten Formhälfte anhaftet.

4. Verfahren gemäß Anspruch 3, wobei die Oberflächenbehandlung eine KoronaBehandlung oder eine Plasma-Behandlung ist.

5. Das Verfahren gemäß einem der Ansprüche 1 bis 4, wobei das heiße Wasser eine Temperatur von mehr als etwa 70°C hat.

6. Das Verfahren gemäß einem der Ansprüche 1 bis 5, wobei in Schritt f) die Form in heißem Wasser getrennt wird.

7. Verfahren gemäß Anspruch 2, wobei in Schritt g) das heiße Wasser für mindestens etwa 5 Sekunden in die Grenzfläche zwischen der Linse und der linsenanhaftenden Formhälfte eindringen gelassen wird.

8. Das Verfahren gemäß einem der Ansprüche 1-7, wobei in Schritt h) die Formhälfte mit der daran anhaftenden Linse in kaltem Wasser mit einer Temperatur von unter etwa 15°C eingeweicht wird.

9. Verfahren gemäß Anspruch 8, wobei das kalte Wasser eine Temperatur von unter etwa 10°C hat.

10. Verfahren gemäß Anspruch 8, wobei das kalte Wasser eine Temperatur von unter etwa 5°C hat.

11. Das Verfahren gemäß einem der Ansprüche 1-7, wobei in Schritt h) die Formhälfte mit der daran anhaftenden Linse in Raumtemperatur-Wasser mit einer Temperatur von etwa 15°C bis etwa 35°C eingeweicht wird.

12. Verfahren gemäß Anspruch 11 , wobei das Raumtemperatur-Wasser eine Temperatur von etwa 20°C bis etwa 30°C hat.

13. Das Verfahren gemäß einem der vorangehenden Ansprüche, ferner umfassend den Schritt des Entfernens der Linse aus der linsenanhaftenden Formhälfte und Ablegen der Linse in eine Schale zur weiteren Bearbeitung.

14. Verfahren gemäß Anspruch 13, wobei die weitere Bearbeitung der Linse mindestens ein Mitglied der Gruppe bestehend aus Extraktion, Oberflächenbehandlung, Hydratisierung, Äquilibrierung, Verpackung, Sterilisierung, und Kombinationen davon umfasst.

15. Das Verfahren gemäß einem der vorangehenden Ansprüche, wobei das Verfahren unter Kontrolle eines Computers automatisch ausgeführt wird.

16. Das Verfahren gemäß einem der vorangehenden Ansprüche, wobei eine geringe Kraft angewendet wird um das Aufbrechen der Dichtung zwischen den Formhälften zu erleichtern und/oder um das Eindringen des heißen Wassers in die Form zu beschleunigen.

## Revendications

1. Procédé de production de lentilles de contact, comprenant les étapes consistant à :
a) fournir un moule comportant un demi-moule mâle qui présente une première surface de moulage et un demi-moule femelle qui présente une seconde surface de moulage, où les demi-moules mâle et femelle sont configurés pour se recevoir l'un l'autre de façon à ce qu'une cavité de moule soit formée entre les première et seconde surfaces de moulage lorsque le moule est fermé ;
b) distribuer une quantité d'un matériau d'hydrogel de silicone formant la lentille dans l'un des demi-moules mâle et femelle ;
c) apparier les demi-moules mâle et femelle pour fermer le moule ;
d) durcir le matériau d'hydrogel de silicone formant la lentille entre les deux demi-moules, formant de ce fait une lentille de contact moulée en hydrogel de silicone ;
e) mettre à tremper le moule contenant la lentille de contact moulée en hydrogel de silicone dans de l'eau chaude qui présente une température supérieure à environ 50 °C pendant une durée suffisamment longue pour permettre à l'eau chaude de pénétrer dans le moule et d'hydrater la lentille moulée qui s'y trouve ;
f) séparer le moule en demi-moules mâle et femelle, la lentille de contact en hydrogel de silicone adhérant à l'un des demi-moules mâle et femelle ; et
g) mettre la lentille collée au demi-moule adhérant à la lentille à tremper dans de l'eau à température ambiante présentant une température comprise entre environ 15 °C et environ 35 °C ou dans de l'eau froide présentant une température inférieure à environ 15 °C pour faire en sorte que la lentille et le demi-moule adhérant à la lentille se contractent de façon différentielle de façon à faciliter le détachement de la lentille d'avec le demi-moule adhérant à la lentille ; et retirer la lentille du demi-moule adhérant à la lentille pour son traitement ultérieur.

2. Procédé selon la revendication 1, dans lequel le procédé comprend l'étape g) dans laquelle la lentille collée à un demi-moule est mise à tremper dans de l'eau chaude présentant une température supérieure à environ 50 °C pendant une durée suffisante pour que l'eau chaude pénètre dans l'interface entre la lentille et le demi-moule adhérant à la lentille de façon à réduire l'adhésion entre la lentille et le demi-moule adhérant à la lentille.

3. Procédé selon la revendication 1 ou 2, dans lequel l'un des demi-moules mâle et femelle est soumis à un traitement de surface avant son utilisation afin que la lentille de contact moulée adhère de façon préférentielle à un demi-moule particulier lors de l'ouverture du moule.

4. Procédé selon la revendication 3, dans lequel le traitement de surface est un traitement corona ou un traitement au plasma.

5. Procédé selon l'une quelconque des revendications 1 à 4, dans lequel l'eau chaude présente une température supérieure à environ 70 °C.

6. Procédé selon l'une quelconque des revendications 1 à 5, dans lequel, à l'étape f), le moule est séparé dans l'eau chaude.

7. Procédé selon la revendication 2, dans lequel, à l'étape g), on laisse au moins environ 5 secondes à l'eau chaude pour pénétrer dans l'interface entre la lentille et le demi-moule adhérant à la lentille.

8. Procédé selon l'une quelconque des revendications 1 à 7, dans lequel, à l'étape h), le demi-moule adhérant à la lentille est mis à tremper dans de l'eau froide qui présente une température inférieure à environ 15 °C.

9. Procédé selon la revendication 8, dans lequel l'eau froide présente une température inférieure à environ 10 °C.

10. Procédé selon la revendication 8, dans lequel l'eau froide présente une température inférieure à environ 5 °C.

11. Procédé selon l'une quelconque des revendications 1 à 7, dans lequel, à l'étape h), le demi-moule adhérant à la lentille est mis à tremper dans de l'eau à température ambiante présentant une température comprise entre environ 15 °C et environ 35 °C.

12. Procédé selon la revendication 11, dans lequel l'eau à température ambiante présente une température comprise entre environ 20 °C et environ 30 °C.

13. Procédé selon l'une quelconque des revendications précédentes, comprenant en outre l'étape consistant à retirer la lentille du demi-moule adhérant à la lentille et à placer la lentille dans un plateau pour un traitement ultérieur.

14. Procédé selon la revendication 13, dans lequel le traitement ultérieur de la lentille comprend au moins un élément sélectionné dans le groupe composé d'une extraction, d'un traitement de surface, d'une hydratation, d'une stabilisation, d'un conditionnement, d'une stérilisation et de combinaisons de ceux-ci.

15. Procédé selon l'une quelconque des revendications précédentes, dans lequel le procédé est réalisé automatiquement, sous le contrôle d'un ordinateur.

16. Procédé selon l'une quelconque des revendications précédentes, dans lequel une légère force est utilisée pour faciliter la rupture du joint entre les demi-moules et/ou pour accélérer la pénétration de l'eau chaude dans le moule.
